# EUROPEAN PATENT APPLICATION

(11) **EP 0 547 911 A2**
(43) Date of publication of application: **23.06.1993**
(21) Application number: 92311566.1
(22) Date of filing: 17.12.1992
(51) Int. Cl.: G06F 9/44

(54) **Method for storing a program into an auxiliary memory**

(30) Priority: 17.12.1991 JP 353438/91
(71) Applicant: HUDSON SOFT CO., LTD., Sapporo-shi, Hokkaido 062 (JP)
(72) Inventor: Miura, Takashi, c/o Hudson Soft Co., Ltd., Sapporo-shi, Hokkaido (JP)
(74) Representative: Brunner, Michael John

(57) **Abstract**

A program structure definition is preserved in an auxiliary memory. When a program is conducted, the program is generated from the definition by a program generator, and is developed in the auxiliary memory or a main memory. After the program has been conducted, the program is deleted from the memory.

## Description

The invention relates to a method for storing a program into an auxiliary memory, and more particularly to, a method for saving a memory which is an auxiliary storing apparatus for a computer.

These days, portable type small computers have been widely used, wherein flexible disks, electronic cards, etc. are used for auxiliary memories. A memory capacity of such a flexible disk, an electronic card, etc. is approximately 1 M bytes.

In operation of a computer, a program of a conducting form which is read from an auxiliary memory is loaded into a main memory of the computer.

However, the amount of program files which are stored in such an auxiliary memory having a capacity of 1 M bytes is limited. For instance, even if a program is simple, it needs 100 to 200K bytes to provide a system which can be conducted. In a simple calculation, only five to ten programs are sorted in one flexible disk of 1M bytes.

In order to store program files as much as possible into an auxiliary memory, a program is compressed to save a memory in accordance with the replacement of repetitive data and frequently appearing same data by simple data. Such a compressed program file is developed to be restored in the form of an original program file which is practically used in a computer by using a developing program. Otherwise, such a compressed program is directory extended and developed on a main memory of a computer to be conducted in the computer.

In general, programs to be frequently used or a grouped library are preferable to be stored in a common auxiliary memory. In case of using a computer such as a portable computer with which a large capacity of an auxiliary memory can not be utilized, auxiliary memories must be replaced by each other, when a program to be conducted is changed.

In case of storing a program which is compressed, the program must be developed, when it is conducted. Otherwise, a particular computer in which a program is conducted in the form of compression is required to be used. In this case, however, a size of the compressed program is generally limited.

According, it is an object of the invention to provide a method for storing a program into an auxiliary memory by which the number of programs is increased.

According to the invention, a method for storing a program into an auxiliary memory, comprises the steps of:
storing conditions for generating said program into said auxiliary memory;
generating said program in accordance with said conditions by using a program generator;
processing signals in a computer by conducting said program; and
deleting said program, while still preserving said conditions in said auxiliary memory.

The invention will be explained in more detail in conjunction with the appended drawing, wherein:

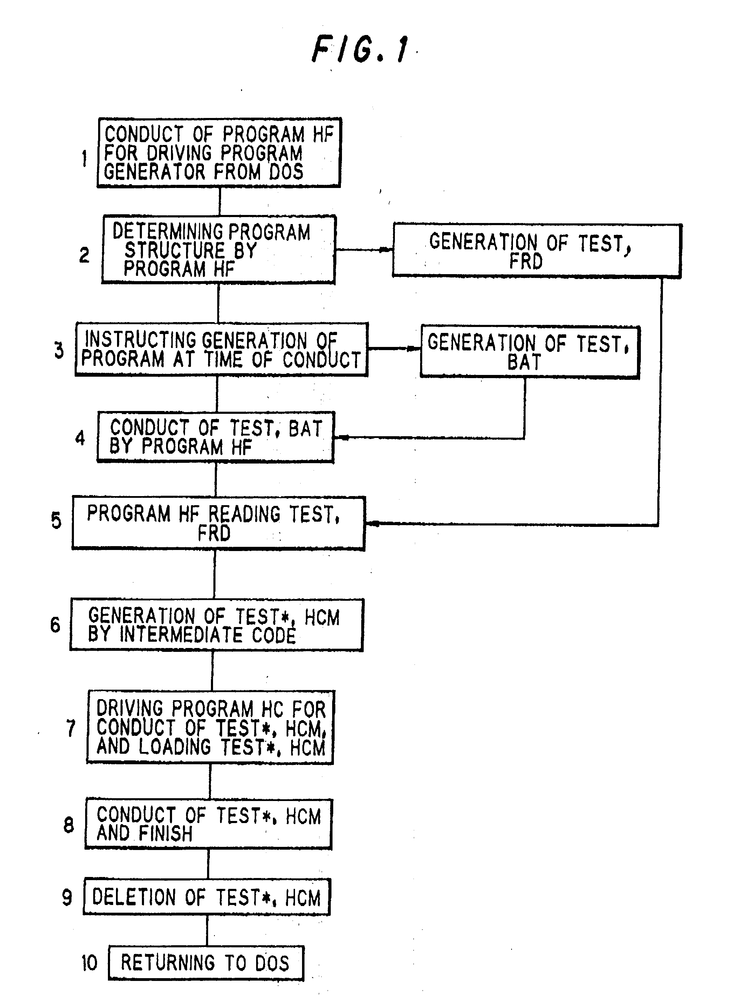

Fig. 1 is a flow chart showing operation of a method for storing a program into an auxiliary memory in a preferred embodiment according to the invention.

A method for storing a program into an auxiliary memory of the preferred embodiment will be explained.

In this preferred embodiment, a program HF for driving a program generator, a program HC for conducting a generated program, and a program for carrying out the administration of peripheral circumstance are prepared.

The program HF has a definition function for defining a form of data and an input display, and an additional function for print item, reference, sort, collective processing, etc. The function of generating a program is realized by intermediate code and ASCII code, and a batch file for conducting a procedure of generating a program is generated by a quasi-generation function.

Where the program HF is based on the intermediate code, the program HC is driven by conducting a batch file, or a generated program is conducted by designating a macroprogram. On the other hand, where the program HF is based on the ASCII code, a compilation can be made by an ordinary editor program. However, the conduct thereof needs a conducting program.

A main program is generated for each item of the additional function such as print, reference, etc. in accordance with the form of data defined in a program structure file which is generated along with a batch file. The main program is deleted, when the conduct of the main program has been completed, and the program structure file, the batch file, data file and data reference file are only preserved in a memory.

The size of the preserved files is totally 5 to 10K bytes. As compared to a case where a program is preserved in a memory, information can be stored in the memory in amount by ten to twenty times.

A method for storing a program into an auxiliary memory of the preferred embodiment as briefly explained above will be again explained in Fig. 1.

### [STEP 1]

The program HC for driving a program generator is conducted by DOS (disk operating system).

### [STEP 2]

The structure of a program is defined by the program HF. In this definition, data input mode based on data item, column width, form and data decimal point, comma, and presence and non-presence of reference data are designated. These defined content is generated as a program structure file TEST, FRD. A program structure file TEST, FRD is also generated for the additional function such as input display, print, reference, sort, etc.

### [STEP 3]

A form of a program is selected from the intermediate code, the ASCII code, and the generation of a program at the time of conducting the program. In this preferred embodiment, the generation of a program at the time of conducting the program is selected, so that a batch file TEST, BAT is generated.

On the other hand, where the intermediate code is selected, an intermediate code program is generated in accordance with a definition, and a batch file to be conducted by DOS is generated, while, where the ASCII code is selected, an ASCII code program is generated. In these cases, the generated program is preserved.

The batch file TEST, BAT comprises the generation of the intermediate code program, the conduct of the generated program by the conducting program HC, and the deletion of the generated program.

### [STEP 4]

The batch file TEST, BAT is conducted.

### [STEP 5]

The program HF reads the program structure file TEST, FRD generated at the step 2.

### [STEP 6]

The program generator generates a program file based on intermediate code. At this step, a main menu program TEST, HCM is generated, and where the additional function of a program structure definition is defined, an intermediate code program TEST^{*}, HCM such as data input, data display, layout print, sight print, total print, reference, sort, collective processing, and reference master renewal is generated in accordance with the content thereof.

### [STEP 7]

The program HC for conducting the generated program is driven to read the intermediate code program TEST^{*}, HCM.

### [STEP 8]

The conduct of the intermediate code program TEST^{*}, HCM has been carried out and finished.

### [STEP 9]

The intermediate code program TEST^{*}, HCM is deleted from a memory.

### [STEP 10]

The procedure returns to DOS.

Consequently, the program structure file TEST, FRD, the batch file TEST, BAT, the main data file TEST, HCD, and the main data reference file TEST, HCX are left to be preserved in the memory, and, where there is a reference data, the reference data file TEST@M, HCD and the reference data reference file TEST@M, HCX are further left to be preserved in the memory.

In this preferred embodiment, at most eleven programs of a batch file TEST, BAT, a program structure file TEST, FRD, a main menu program TEST, HCM, and at most eight intermediated code programs are generated to require a memory capacity of 200K bytes. Advantageously, six files of the program structure file TEST, FRD, the batch file TEST, BAT, the main data file TEST, HCD, the main data reference file TEST, HCX, the reference data file TEST@M, HCD, and the reference data reference file TEST@M, HCX are left to be preserved in the memory, so that only 10K bytes memory capacity is required. Whenever a program is required to be conducted, the program HF for driving the program generator is conducted, so that the above six programs left in the memory are conducted to generate the program to be conducted.

As described above, a program generating condition file which stores conditions prescribed in generating a program by using a program generator is stored in an auxiliary memory. In conducting a program, the program is generated in accordance with the program generating condition file by the program generator. The generated program is developed in a vacant region of the auxiliary memory. The generated program may be directly developed in a main memory of a computer. The generated program may be intermediate code or machine word. The generated program is deleted from the memory, after the conduct of the generated program has finished.

Although the invention has been described with respect to specific embodiment for complete and clear disclosure, the appended claims are not to be thus limited but are to be construed as embodying all modification and alternative constructions that may occur to one skilled in the art which fairly fall within the basic teaching herein set forth.

## Claims

1. A method for storing a program into an auxiliary memory, comprising the steps of:
storing conditions for generating said program into said auxiliary memory;
generating said program in accordance with said conditions by using a program generator;
processing signals in a computer by conducting said program; and
deleting said program, while still preserving said conditions in said auxiliary memory.

2. A method for storing a program into an auxiliary memory, comprising the steps of:
storing a program generating condition file into said auxiliary memory, said program generating condition file loading conditions prescribed in generating said program by a program generator;
generating said program from said program generating file by said program generator; and
deleting said program after said program has been conducted.
